(19) Europäisches Patentamt
European Patent Office
Office européen des brevets

(11) **EP 2 230 740 A2**

(12) **EUROPEAN PATENT APPLICATION**

(43) Date of publication:
**22.09.2010 Bulletin 2010/38**

(51) Int Cl.:
***H02H 7/00*** *(2006.01)*     ***H01F 6/06*** *(2006.01)*

(21) Application number: **10305257.7**

(22) Date of filing: **16.03.2010**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA ME RS**

(30) Priority: **18.03.2009 DE 102009013318**

(71) Applicant: **Nexans
75008 Paris (FR)**

(72) Inventors:
• **Dommerque, Robert
 50321, Brühl (DE)**
• **Bemert, Sergej
 115563, Moscou (RU)**

(74) Representative: **Feray, Valérie et al
Feray Lenne Conseil
Le Centralis
63, avenue du Général Leclerc
92340 Bourg-la-Reine (FR)**

(54) **Superconductive current limiter with magnetic field triggering**

(57)     The present invention relates to a superconductive current limiter component with magnetic field triggering having a tubular superconductor element (1) which is connected in electrical parallel with a trigger coil (3), wherein the trigger coil runs from a first end of the tubular superconductor element (1) on one side of the lateral face of the tubular superconductor element (1) in the direction of the second end of the tubular superconductor element (1), is deflected at that point to the other side of the lateral face and runs back in the direction of the first end, and so on.

Figure 1b

EP 2 230 740 A2

**Description**

The present invention relates to a superconductive current limiter component with magnetic field triggering wherein a superconductor element is inserted in a coil and is connected in electrical parallel with the latter.

Current limiters based on high-temperature superconductors (HTS) are of great benefit particularly as safety systems for power supply systems, particularly high-voltage networks, since they can prevent disproportionately large current spikes, for example in the event of a short, which can otherwise result in the installation being destroyed.

High-temperature superconductors provide new opportunities for optimizing power supply systems by virtue of their reducing the load to which the installation is subject in the event of current spikes.

In the superconductive state, superconductors behave like zero-loss electrical conductors.

All superconductive materials lose their superconductivity abruptly if

   a) the critical temperature ($T_c$)
   b) the critical magnetic field ($H_c$) or
   c) the critical current density ($I_c$) is exceeded or if
   d) two or three of these events occur at the same time.

Resistive current limiters use these properties: as soon as the current density at a point on the superconductor exceeds the critical value, said superconductor leaves its superconductive state and changes to the normally conductive state, as a result of which the flow of current is limited. The transition from the superconductive state to the normally conductive state is usually referred to as "quenching". After the system error, when the current reaches its usual value again, the superconductor returns to the superconductive state and is ready for subsequent use.

In reality, however, the superconductor material from which a superconductor component is produced is not homogeneous over the entire component. This inhomogeneity means that the aforementioned properties such as critical current density may differ in different regions of the component. The result of this is that in the event of a fault some regions are already quenching, that is to say become normally conductive, while other regions are still in the superconductive state. On account of the regions which are still superconductive, a large current flows through the component and results in a large rise in temperature in the regions which are already normally conductive. This large rise in temperature results in these regions melting. So as to prevent damage or destruction to the superconductor component, therefore, the quench process needs to proceed as homogeneously and quickly as possible, so that the superconductor component as a whole changes to the normally conductive state within a sufficiently short time for melting to be able to be prevented.

There are various approaches to providing support for a homogeneous and fast change by the superconductor component to the normally conductive state.

It was thus known practice for a layer of normally conductive material, such as silver, to be applied to the surface of a high-temperature superconductor component along the longitudinal extent of the high-temperature superconductor component, said layer being in electrical contact with the high-temperature superconductor material over its entire extent. If a region of the superconductor component then begins to quench in the case of limiting, current and heat are transmitted to the "shunt" and are dissipated via the latter. The transmission and dissipation prevent the superconductor component from melting.

According to another concept as described in EP 1 524 748 A1, the full content of which is referred to herein, the current limiter comprises a cylindrical high-temperature superconductor component around which a coil comprising normally conductive material such as copper or silver is wound spirally and coaxially with respect to the longitudinal axis of the high-temperature superconductor component. The normally conductive coil is connected in electrical parallel with the HTS component via electrical contacts at both ends of the HTS component. Unlike in the case of the approach described above, the coil is in this case merely physically wound around the high-temperature superconductor component - there is no electrical contact along the overall extent.

As soon as the current density at a point on the superconductor component now exceeds the critical value and said superconductor component leaves its superconductive state locally, current is diverted into the parallel-connected coil. The flow of current in the coil results in a magnetic field which immediately forces the high-temperature superconductor component into the normally conductive state over its entire length and thus speeds up the quench process and the current limiting. This effect is referred to as "magnetic field triggering".

In this case, the speed of the quench process is dependent on the speed at which the magnetic field is set up by the coil and on the size of the magnetic field.

To be able to attain a quench process which is as fast as possible, it was therefore desirable to obtain a current limiter with magnetic field triggering which can quickly produce a magnetic field which is as large as possible.

The invention achieves this object by means of a superconductive current limiter component having a tubular superconductor element, which is connected in electrical parallel with a coil of conductive material, wherein the tubular superconductor element has a first and a second end and the coil winding runs in an axial direction between the first and second ends of the superconductor element alternately on the outer and inner lateral faces of the superconductor element along the perimeter.

In line with the invention, the individual turns of the coil extend along the longitudinal extent of the superconductor component between the first and second ends, so that the individual turns encompass the lateral face on the outside and inside in the direction of the longitudinal axis.

Within the context of the present invention, the type of winding based on the invention is referred to as "azimuthal".

The tubular superconductor element used in line with the invention has a tubular cross section with a hollow interior. The superconductor element may have any desired tubular or cylindrical shape.

In principle, it may have any desired basic shape. Examples of suitable basic shapes are a round, oval or polygonal basic shape.

One preference based on the invention is that the superconductor element has a tubular shape or cylindrical shape with a round basic shape. The cylinder or the tube may also have deviations from the ideal round basic shape.

Depending on the requirements of the specific instance of application, one or more of the current limiter components according to the invention may be connected in electrical parallel and/or in series with one another. In line with a further embodiment, the azimuthal coil according to the invention can extend over two or more tubular superconductor elements, wherein it extends from the first end of the first superconductor element to the second end of the last superconductor element and is respectively electrically connected to the first end of the first superconductor element and to the second end of the last superconductor element. The tubular superconductor elements surrounded by the coil may be connected in electrical series with one another.

In the regions of the tubular superconductor elements at which the turns of the coil need to be deflected from one side of the lateral face to the other side (also called deflection points), there are through-holes through which the coil wire can be passed from one side to the other side.

Preferably, the through-holes are regularly arranged at the same height on the superconductor element around the perimeter.

In line with a further embodiment, at least the coil and the lateral face of the tubular superconductor element have a thin insulating layer between them in a manner which is known per se. Equally, the inner surface of the through-holes may be provided with a thin insulating layer.

In principle, the present invention can be used for all superconductive materials.

High-temperature superconductive materials which typically have a critical temperature (Tc) above the temperature of liquid nitrogen are particularly suitable.

Examples of these are high-temperature superconductive ceramic oxides based on bismuth, yttrium, thallium and mercury such as $Bi_2Sr_2Ca_1Cu_2O_y$ (BSCCO 2212), $Bi_2Sr_2Ca_2Cu_3O_y$ (BSCCO 2223), $Y_1Ba_2Cu_3O_y$ (YBCO 123), $Tl_2Ba_2Ca_2Cu_3O_y$, $Tl_1Ba_2Ca_2Cu_3O_y$, $Hg_1Ba_2Ca_2Cu_3O_y$ and $Hg_1Ba_2Ca_1Cu_2O_y$, where y is the oxygen content at which the respective ceramic oxide has superconductive properties.

A particular preference for the present invention is superconductor materials of BSCCO and YBCO type. Preferred superconductor materials of BSCCO type are BSCCO 2212 and 2223, for example.

To improve the properties, the aforementioned compounds may be doped or substituted with further elements. For example, in BSCCO a portion of bismuth may have been substituted with lead [(Pb-)Bi]-Sr-Ca-Cu-O and/or Sr may have been partially substituted with barium.

In addition, the HTS material may contain one or more suitable compounds according to need, such as sulfates of alkaline earth metals such as sulfates with a high melting point, for example $BaSO_4$, $SrSO_4$ and/or $BaSr(SO_4)_2$.

The tubular superconductor element may be a solid body comprising superconductor material.

It may be formed from thin layers of superconductor material, wherein a suitable tubular support is coated with superconductor material on the outside and inside in a manner known per se.

The present invention is explained in more detail below using preferred embodiments with reference to the accompanying figures, in which

    **Figure 1a** schematically shows a longitudinal section through a known current limiter with a coaxially wound coil,
    **Figure 1b** schematically shows a cross section through the known current limiter shown in figure 1A with a coaxial coil winding;
    **Figure 2a** schematically shows a longitudinal section through a current limiter according to the invention with an azimuthal coil winding;
    **Figure 2b** schematically shows a cross section through the current limiter according to the invention which is shown in figure 2A; and
    **Figure 3** schematically shows a longitudinal section through a further embodiment of the present invention.

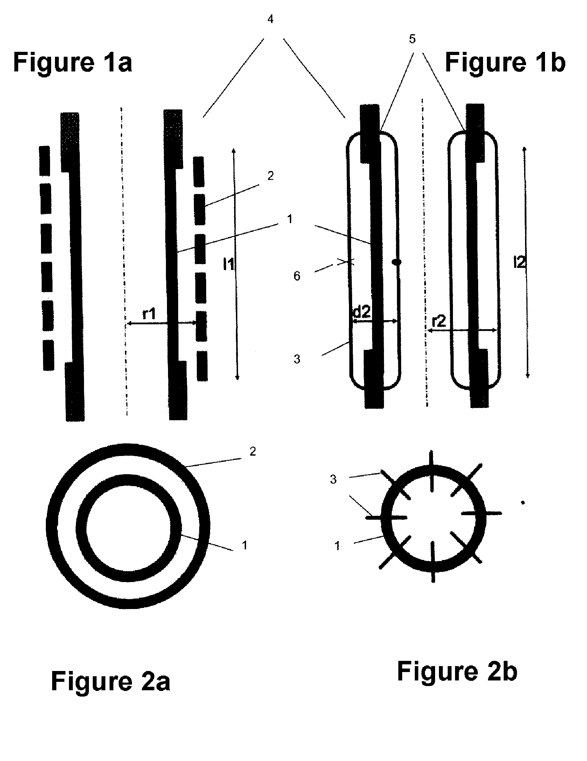

In figures 1a and 2a, the tubular superconductor element is denoted by 1 and the coil is denoted by 2 (prior art) or 3 (in line with the invention).

In addition, the ends of the superconductor elements 1 have, as is known generally, respective electrical contacts 4 by means of which the superconductor elements 1 can be electrically connected to a network or to further current limiter elements.

The electrical contacts 4 comprise a material which is a normal electrical conductor, usually a metal such as copper, silver or alloys of these metals. Suitable materials for the electrical contacts 4 and the mounting thereof are known generally and described frequently.

The coils 2 and 3 essentially extend over the entire length of the superconductor element between the electrical contacts 4, but the winding direction of the coil 3 according to the invention runs essentially at right angles to the winding direction of the coil 2.

Preferably, the deflection points 5 of the coil 3 are situated, as shown in figure 2a, in the region of the electrical contacts 4 or in the first tubular element 1 directly adjacent to the edges of the electrical contacts 4.

A respective end of the coils 2, 3 is electrically connected to an electrical contact 4, so that the coils 2, 3 are connected in electrical parallel with the superconductor element 1.

The coils 2, 3 themselves are not in electrical contact with the surface of the superconductor elements 1, but rather are physically wound around it. This means that there is no electrical contact between the coil face and the surface of the superconductor element 1, and hence no flow of current.

The coil 3 according to the invention may comprise the same materials as the coil 2. It may comprise a normally conductive material such as a metal or else a superconductor material.

Suitable metals are copper, copper alloys, steel, etc. Examples of coils comprising superconductive material are ribbon-like superconductors, for example comprising a BSCCO material or comprising YBCO thin layers.

If the coil comprises a superconductive material, there should be a sufficiently high contact resistance provided in order to prevent a premature flow of current in the coil.

The coil wire may have any desired cross-sectional shape, with a round or rectangular cross-sectional shape, such as a ribbon shape, being preferred.

As in the case of the conventional coaxially wound coil, the number of turns or the pitch is not particularly critical for the coil according to the invention.

Depending on the application, the necessary number of coil turns may vary. This can easily be determined by a person skilled in the art.

For rapid and homogeneous quenching, however, it has proven successful for as much superconductor area as possible to be surrounded by a coil winding.

Preferably, at least 90% of the lateral face, particularly preferably at least 95% and particularly 100% of the lateral face is surrounded by the coil.

The speed of the magnetic field setup by the coil is essentially influenced by the flow of current through the coil. The flow of current through the coil should therefore occur as quickly as possible and be as large as possible.

The lateral face, and hence superconductor element, which is surrounded by the individual turns, should be as large as possible. Preferably, the coil is wound around the superconductor body as tightly as possible. Preferably, the coil rests on the surface of the superconductor element. In this case, an insulating layer may be provided in order to avoid a short between superconductor element and coil.

The effect of the azimuthal winding is that the coil 3 according to the invention encompasses more superconductor area per unit area than the conventional coil 2. As demonstrated by the calculation below, this allows a significantly higher magnetic field to be attained by the coil according to the invention.

For the calculation, it is assumed that the coils 2,3 in the two embodiments shown have the same inductance and accordingly, the same current is present in the coils 2, 3.

Therefore, when $I_1 = I_2$ (coil current); $L_1 = L_2$ (inductance):

both coils comprise copper.

$$L_1 = \mu \frac{N_1^2 \times \pi \times r_1^2}{l_1} = L_2 = \mu \frac{N_2^2 \times d \times l_2}{2 \times \pi \times r_2}$$

$$N_2 = \sqrt{\frac{2 \times \pi^2 \times r_1^2 \times r_2}{d \times l_1 \times l_2}} \times N_1$$

$$B_1 = \mu \frac{N_1}{l_1} \times I$$

$$B_2 = \mu \frac{N_2}{2\pi \times r_2} \times I$$

$$\frac{B_2}{B_1} = \frac{l_1 \times \sqrt{\dfrac{2 \times r_1^2 \times r_2}{d \times l_1 \times l_2}}}{2 \times r_2}$$

$$\frac{B_2}{B_1} = \frac{l_1 \times \sqrt{\dfrac{r_1^2 \times r_2}{d \times l_1 \times l_2}}}{2r_2} = \frac{0.26 \times \sqrt{\dfrac{2 \times 0.067^2 \times 0.046}{0.012 \times 0.26 \times 0.27}}}{2 \times 0.046} = 1.98$$

Legend

$L_1$: inductance of the known coil
$L_2$: inductance of the coil according to the invention (when $L_1 = L_2$)
$l_1$: length of the known coil 260 mm
$l_2$: length of the coil according to the invention 270 mm
$r_1$: average diameter of the known coil 67 mm
$r_2$: average diameter of the coil according to the invention 46 mm
d: thickness of the coil according to the invention 12 mm

The result shows that when the two coils have the same inductance, the coil according to the invention can be used to obtain a magnetic field which is approximately twice as large.

The same inductance means that the magnetic field is set up within the same time. In respect of the above result, this means that when the inductance of the coil according to the invention is reduced, a magnetic field of the same magnitude as for a coaxial coil can be achieved within a shorter time.

In line with one refinement according to the invention, the current limiter component comprises a second tubular superconductor element 7 which surrounds the first tubular superconductor element 1 with an azimuthally wound coil 3. The second tubular superconductor element 7, also called compensating tube 7, preferably extends over the entire length between the two contacts 4 of the first tubular superconductor element 1.

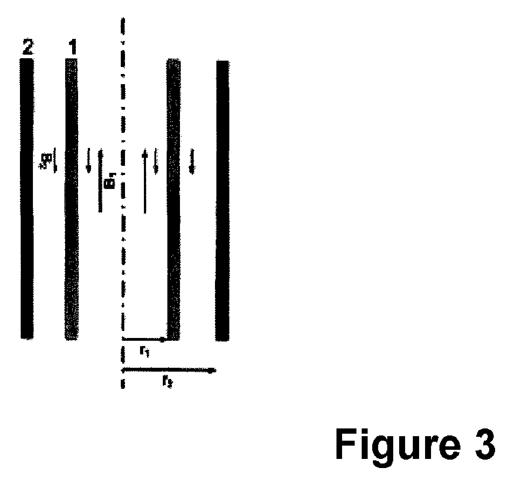

Figure 3 schematically shows the design of this refinement, the azimuthal coil 3 of the superconductor element 1 having been omitted to provide a better overview.

The compensating tube 7 can be used to reduce AC losses and to improve the current-carrying capacity of the current limiter component.

The cause of AC losses is the change in the magnetic field formed in the current-carrying superconductor element during AC operation. The larger this magnetic field, the larger the AC losses.

During normal operation, the magnetic field of the first tubular superconductor element 1 produces, in the compensating tube 7, a voltage or a current which corresponds to the field of the first tubular superconductor element 1. The voltage induced in the compensating tube 7 (or the induced current) for its part produces a magnetic field which is the inverse of the magnetic field of the first tubular superconductor element 1 and hence compensates for or reduces the magnetic field in the first tubular superconductor element 1.

The smaller the magnetic field of the first tubular superconductor element 1, the smaller the AC losses.

The compensating tube may be manufactured from the same superconductor material as the first tubular superconductor element. It is also possible to use a different material, however.

Suitable high-temperature superconductor materials are the same as listed above for the first tubular superconductor element.

It is essential that the current flowing in the compensating tube does not exceed the current-carrying capacity Ic of the compensating tube.

The factors on which the current-carrying capacity Ic of a superconductor material are dependent are known per se. Examples are the specific superconducting material per se, the wall thickness of the tube, the operating temperature and the surrounding magnetic field. Preferably, the current-carrying capacity of the compensating tube is greater than that of the first tubular superconductor element.

Factors which can influence the strength of the magnetic field of the compensating tube are the size of the magnetic field of the first tubular superconductor element and the size of the cross-sectional areas of the first tubular superconductor element (A1) and of the compensating tube (A2), for example.

Like the first tubular superconductor element, the compensating tube can have any desired basic shape in principle, such as a round, oval or polygonal basic shape.

Preferably, it has the same basic shape as the first tubular superconductor element.

A cylindrical or essentially cylindrical basic shape is preferred. Like the first tubular superconductor element, the compensating tube may have discrepancies in shape and angle, particularly in respect of the deviation from the roundness of a cylinder or the deviation from the right angle of the axis of the cylinder from the plane, which is used to determine an angle for the cylinder.

The manner in which the compensating tube is held in position is not critical per se and it is possible to use any desired holder.

By way of example, the compensating tube may be connected to the holder, to which the first tubular superconductor element with azimuthal coil angulation is also attached in the installation in which it is used.

There is no electrical connection between the first tubular superconductor element and the compensating tube.

The interspace between the first tubular superconductor element and the compensating tube can, in principle, contain any desired electrically nonconductive medium or vacuum.

Advantageously, this interspace contains the same cooling means as is used to cool the installation, usually liquid nitrogen.

Advantageously, a medium should be chosen whose permeability $\mu$ is 1 or approximately 1.

The text below explains the way in which the compensating tube works in more detail.

In figure 3, the direction of the magnetic field $B_1$ of the superconductor element 1 is shown by upwardly directed arrows and that of the magnetic field $B_2$ of the compensating tube 7 is shown by downwardly directed arrows.

The magnetic flux $\Phi_1$ inside the superconductor element 1 is obtained as $B_1 \cdot A_1$, and the magnetic flux $\Phi_2$ inside the tube 7 is obtained as $B_2 \cdot A_2$.

On account of the superconductive properties of the tube 7, the total magnetic flux $\Phi_g$ inside the tube 7 with superconductor element 1 is always zero.

The following are true:

$$\Phi_g = B_1 \bullet A_1 + B_2 \bullet A_2 = 0$$

or

$$B_1 \bullet A_1 = B_2 \bullet A_2$$

where

$\Phi_g$ is the total magnetic flux ($\Phi_1$ and $\Phi_2$)

$B_1$ is the magnetic field of the superconductor element (following compensation)

$A_1$ is the internal cross-sectional area of the superconductor element

$B_2$ is the magnetic field of the compensating tube

$A_2$ is the internal cross-sectional area of the compensating tube.

For magnetic fields $B_1$ and $B_2$ of the same size, albeit inversely directed, it follows from the above formulae that full compensation for the magnetic flux requires the internal cross-sectional area $A_1$ of the superconductor element 1 to be the same as the internal cross-sectional area $A_2$ of the compensating tube 7. In order for this ideal case to arise, the superconductor element 1 and the compensating tube 7 would need to have an infinitely thin wall thickness and to lie directly on one another.

In reality, as shown in figure 3, the internal radius $r_1$ of the superconductor element is smaller than the internal radius $r_2$ of the compensating tube 7 (including the wall thickness of the superconductor element).

If the magnetic fields $B_1$ and $B_2$ have the same absolute value in this case, then, although there is full compensation for the magnetic field $B_1$ inside the superconductor element 1, the magnetic field $B_2$ and a magnetic flux $\Phi$ with $B_2 \cdot \P (r_2^2 - r_1^2)$ still exist in the annularly surrounding region inside the compensating tube 7, which is defined by $r_2 - r_1$.

In AC mode, this uncompensated-for magnetic field $B_2$ would for its part result in AC losses which have the same order of magnitude as the AC losses which would have been produced by the uncompensated-for magnetic field $B_1$.

As a result, there is no reduction of the AC losses.

However, it has been found that the AC losses are not directly proportional to the magnetic field but rather increase exponentially with $B_n$ where n > 1. The magnitude of the exponent n is dependent on the specific superconductor material and is usually in an order of magnitude of 3.

On the basis of the exponential dependency where n > 1 and particularly $n \approx 3$, a comparatively small reduction in the magnetic field therefore already prompts a disproportionately high reduction in the AC loss, the reduction in the AC losses being more significant the higher n is.

In other words, for a given reduction in the magnetic field $B_1$, the reduction attained in the AC losses is greater the higher n is, wherein the absolute value of the AC losses decreases exponentially.

In principle, the magnetic field $B_1$ within the superconductor element 1 can be controlled between a value of approximately 0 with almost complete compensation and the maximum value without compensation. Compensation which is suitable for practice lies between these two extremes. Since, as stated, full compensation for the magnetic field $B_1$ is impossible, since $A_1 = A_2$ cannot be implemented, the invention involves the performance of optimization which also takes account of the magnetic field $B_2$ in the annular gap between tube 7 and superconductor element 1. The actually attained compensation can therefore vary for the respective individual case.

A significant prerequisite for the present invention is that the compensating tube 7 has superconductive properties and hence in normal operation, where no current is flowing through the coil, has no electrical resistance, or the electrical resistance changes to zero.

For the planning and design of the present invention, this means that a current induced in the compensating tube 7 must not exceed the current-carrying capacity Ic of the tube 7.

Factors which can influence the strength of the magnetic field $B_2$ are the magnitude of the magnetic field of the superconductor element and the magnitude of the cross-sectional areas $A_1$ and $A_2$, for example.

The invention thus allows the reduction in the AC losses to be optimized for a given cross-sectional area $A_1$ and a given magnetic field $B_1$ for a superconductor element 1 by adjusting the cross-sectional area $A_2$ of the compensating tube 7.

The optimization of the AC losses in a superconductor element 1 which the invention allows is explained in more detail below using the example of a superconductive component with a circular cross-sectional area.

In line with this embodiment, which is preferred in accordance with the invention, the magnetic field $B_1$ of the superconductor element 1 is reduced by 50%.

It has been found that for a 50% reduction in the magnetic field $B_1$, taking account of the exponential dependency of the AC current losses on the strength of the magnetic field, it is possible to obtain an optimum reduction in the AC losses.

Providing that

$$\Phi_g = A_1 \times B_1 + A_2 \times B_2 = o$$

and

$B_1$ (compensated for) = $B_2$,

the following is true for circular cross-sectional areas $A_1$ and $A_2$:

$$A_1 = \P r_1{}^2$$

$$A_2 == \P(r_2{}^{2-} = r_1{}^2)$$

and therefore

$$A_1 = A_2 = \P r_1{}^2 = \P(r_2{}^2 - r_1{}^2) \text{ or,}$$

or,

$$r_2{}^2 = 2 r_1{}^2$$

It follows from this that in order to reduce the magnetic field inside the superconductor element 1 by 50%, the cross-sectional area $A_2$ needs to be chosen to be twice the magnitude of the cross-sectional area $A_1$ of the superconductor element.

This result is independent of the shape of the cross-sectional areas of the superconductor element 1 and of the tube 7 and can therefore also be applied to cross-sectional areas whose shape differs from a round shape, such as elliptical, quadrangular, polygonal etc. shapes.

On the basis of the dependency of the AC losses on the magnetic field where $B^n (n>1)$, there is a resultant disproportionately high reduction in the total losses.

The embodiments above show that the resulting magnetic field inside and outside the superconductor element and the reduction in the AC losses attainable therefrom can be controlled by adjusting the cross-sectional area $A_2$ of the compensating tube 7.

The compensating tube 7 should extend over the entire superconductor element body between the electrical contacts 4.

The compensating tube 7 can also extend entirely or partially over one or both electrical contacts 4.

If regions between the two electrical contacts 4 are not surrounded by the compensating tube 7, for example, if the compensating tube 7 does not extend fully between the two electrical contacts 4, these coil regions which are not surrounded by the compensating tube 7 encounter AC losses which result in heating and particularly in a reduction in the current-carrying capacity Ic of said regions.

Generally, a current limiter must be capable of carrying currents which are higher than a rated current of the apparatus, what are known as overcurrents, for a particular time. A superconductive component which is incorporated in a current limiter also needs to be designed for said overcurrents, inter alia. For the present superconductor element, this means that not only a possible overcurrent itself but also the magnetic field it produces need to be taken into account. This magnetic field reduces the superconductive properties of the superconductor element, which in turn has a direct influence on the design thereof.

A further advantage of the refinement according to the invention with a compensating tube is that the compensating tube reduces the magnetic field of the superconductor element, and therefore the current-carrying capacity of the latter can be increased. For a given superconductor component, the one with the compensating tube therefore has a greater current-carrying capacity than the one without a compensating tube. It was therefore possible to show that the compensating tube can be used to double the time for which a superconductor component can carry an overcurrent.

In conclusion, it can be stated that a superconductor component with a compensating tube not only has reduced AC losses but at the same time exhibits an improved and increased current-carrying capacity.

The reduction in electrical AC losses which is brought about by the compensating tube also has a direct influence on the necessary cooling capability of a superconductive application. The reduction in the AC losses and the reduction in the associated temperature increase mean that demands on the cooling capability of an installation are reduced. As a result, it is possible to reduce not only the purchase costs, for example for an appropriate cooling machine, but at the same time also the operating costs of the application.

Hence, the refinement of the compensating tube is an ideal addition for the inventive current limiter component with a superconductor element having an azimuthally wound coil.

The compensating tube prompts a reduction in the AC losses during normal operation. In the event of a fault, the azimuthal effect of the coil assists the quenching of the superconductor component.

**List of reference symbols**

1. First tubular superconductor element
2. Conventional coaxially wound coil
3. Azimuthally wound coil according to the invention
4. Electrical contacts
5. Deflection point
6. Direction of the magnetic field
7. Compensating tube

**Claims**

1. Superconductive current limiter component having a first tubular superconductor element (1), which is connected in electrical parallel with a coil (3) of conductive material, wherein the first tubular superconductor element (1) has a first and a second end, the coil winding extending in an axial direction between the first and second ends of the first tubular superconductor element (1) alternately on the outer and inner lateral faces of the superconductor element (1) and extending around the perimeter of the latter.

2. Superconductive current limiter component according to claim 1, wherein the first tubular superconductor element (1) has a through-hole (5), through which the coil (3) runs, at the points at which the coil (3) is deflected from one lateral face to the other lateral face.

3. Superconductive current limiter component according to claim 1 or 2, wherein the first tubular superconductor element (1) has electrical contacts (4) at the ends, and the coil (3) is respectively deflected in the region of the electrical contacts (4).

4. Superconductive current limiter component according to one of the preceding claims, wherein the through-holes (5) for deflecting the coil (3) are respectively arranged at the same height and regularly around the perimeter of the first tubular superconductor element (1).

5. Superconductive current limiter component according to one of the preceding claims, wherein the coil winding is such that more than 90% of the lateral face of the first tubular superconductor element (1) is surrounded by the coil (3).

6. Superconductive current limiter component according to one of the preceding claims, wherein the outer and inner lateral faces are provided with a layer of insulating material, and the coil (3) rests directly on the insulating material.

7. Superconductive current limiter component according to one of the preceding claims, wherein the coil (3) comprises a material which is selected from a metal and a superconductor material.

8. Superconductive current limiter component according to one of the preceding claims, wherein the first tubular superconductor element (1) is positioned with the coil (3) within a second tubular superconductor element (7).

9. Superconductive current limiter component according to claim 8, wherein the second tubular superconductor element (7) extends at least over the entire length of the first tubular superconductor element (1) between the first and second ends of the latter.

10. Superconductive current limiter component according to one of the preceding claims, wherein the first tubular superconductor element (1) is a solid element comprising superconductor material or is formed from a tubular support, the outer and inner lateral faces of which are provided with a thin layer of superconductor material.

11. Superconductive current limiter component according to one of claims 8 to 10, wherein the second tubular superconductor element (7) is a solid element comprising superconductor material or is formed from a tubular support, the outer and inner lateral faces of which have a thin layer of a superconductor material applied to them.

12. Superconductive current limiter component according to one of the preceding claims,
    wherein the superconductor material is a high-temperature superconductive ceramic oxide.

13. Superconductive current limiter component according to claim 12,
    wherein the high-temperature superconductive ceramic oxide is selected from a superconductor material of BSCCO
    and YBCO type.

**Figure 1a**

**Figure 1b**

**Figure 2a**

**Figure 2b**

Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1524748 A1